# EUROPÄISCHE PATENTANMELDUNG

(11) **EP 4 751 905 A1**
(43) Veröffentlichungstag der Anmeldung: **03.06.2026**
(21) Anmeldenummer: 24216894.6
(22) Anmeldetag: 02.12.2024
(51) Int. Cl.: B32B 15/01, C21D 1/04, C21D 1/18, C21D 1/42, C21D 9/00, C21D 9/18, A61B 1/00, B26B 21/00, B23P 15/40, B26B 9/00, B26B 5/00, B26B 21/54, B26B 21/58, B21D 53/64, B21D 17/02, B21D 22/02, B21D 28/10, B21K 11/02, B21K 23/00, B26D 1/00

(54) **OPTIMIERTES KLINGENHERSTELLUNGSVERFAHREN**

(71) Anmelder: Lutz GmbH & Co. Kg, 42653 Solingen (DE)
(72) Erfinder: Wurth, Martin, 42929 Wermelskirchen (DE)
(74) Vertreter: AURODION PartmbB

(57) **Zusammenfassung**

Vorliegende Ausführungen betreffen ein Verfahren zur Herstellung einer Klinge (10) aus einem Stahlstrang (12), der entlang einer Längserstreckungsachse (L), einer Querachse (Q) und einer Tiefenachse (T) definiert ist. Der Stahlstrang (12) weist ein Frontende (14) und ein Hinterende (16) sowie zwei parallele Stahlstranglängskanten (18a, 18b) auf, die sich jeweils vom Frontende (14) bis zum Hinterende (16) erstrecken. Das Verfahren umfasst mindestens die folgenden Schritte: Zunächst wird ein Klingenraster physisch in den Stahlstrang (12) eingeprägt, sodass der Stahlstrang (12) eine oder mehrere Einprägungen (20) aufweist, wobei das Klingenraster eine Vielzahl von Klingen (10) abbildet. Anschließend erfolgt ein Partialhärten der einen oder mehrerer Einprägungen (20). Danach wird der Stahlstrang (12) so belastet, dass er entlang zumindest einer der partialgehärteten Einprägungen (20) bricht. Schließlich wird zumindest eine Klinge (10) aus dem Stahlstrang (12) freigegeben, wobei die zumindest eine partialgehärtete Einprägung (20) eine Klingenaußenkante bildet.

## Beschreibung

### Technisches Gebiet

Nachfolgende Ausführungen betreffen ein Verfahren zur Herstellung einer Klinge aus einem Stahlstrang.

Nachfolgende Ausführungen betreffen zudem eine Klinge, hergestellt durch ein solches Verfahren.

### Technischer Hintergrund

Es ist bekannt, dass Klingen in einer Vielzahl von industriellen und handwerklichen Anwendungen, wie Schneidwerkzeugen oder maschinellen Schneidsystemen, Verwendung finden. Die Herstellung solcher Klingen erfolgt üblicherweise aus Stahlsträngen. Diese Stahlstränge werden häufig in Form von Coils geliefert, die anschließend wärmebehandelt sowie mechanisch bearbeitet werden, um bedarfsgerechte Klingen herzustellen.

Der Stand der Technik sieht vor, dass Stahlstränge zunächst gehärtet und nach dem Vereinzeln von Klingen angelassen werden. Ein zentraler Punkt solcher Verfahren besteht darin, dass der gesamte Stahlstrang auf einer erhöhten Härte gehalten wird, um die Klingen per Sprödbruch aus dem Stahlstrang vereinzeln zu können. Diese erhöhte Härte führt jedoch dazu, dass die Klingen nach dem Vereinzeln für bestimmte spätere Anwendungen zu spröde und zu hart sind. Um diese Nachteile auszugleichen, ist Anlassen als nachträgliche Wärmebehandlung erforderlich. Das in Einzelschritte aufgeteilte Härten und Anlassen des gesamten Stahlstrangs ist zeitaufwendig und erhöht die Produktionskosten erheblich.

Es besteht daher ein Bedürfnis nach einem verbesserten Verfahren, das die bestehenden Nachteile überwindet. Ausgehend von diesem Bedürfnis ist es eine vorliegende Aufgabe, ein Verfahren zum Herstellen einer Klinge sowie eine solche Klinge selbst vorzuschlagen, wobei die Herstellungseffizienz gesteigert ist.

### Beschreibung - Technische Lösung

Die vorliegende Aufgabe wird durch die Merkmale des unabhängigen Anspruchs gelöst. Vorteilhafte Ausgestaltungen sind in den Unteransprüchen, der Beschreibung und den Zeichnungen angegeben. Sofern technisch möglich, können die Lehren der Unteransprüche beliebig mit den Lehren der Haupt- und Unteransprüche kombiniert werden.

Insbesondere wird die Aufgabe demnach gelöst durch ein Verfahren zum Herstellen einer Klinge aus einem Stahlstrang, der eine Längserstreckungsachse, eine Querachse und eine Tiefenachse aufweist, und wobei der Stahlstrang entlang der Längserstreckungsachse ein Frontende und ein Hinterende aufweist, wobei der Stahlstrang Stahlstrangaußenkanten mit zwei parallelen Stahlstranglängskanten aufweist, die sich jeweils von dem Frontende bis zum Hinterende erstrecken. Das Verfahren umfasst mindestens folgende Schritte: physisches Einprägen eines Klingenrasters in den Stahlstrang, sodass der Stahlstrang eine oder mehrere Einprägungen aufweist, wobei das Klingenraster eine Vielzahl von, insbesondere entlang der Längserstreckungsachse und/oder Querachse aufeinanderfolgenden, Klingen abbildet; Partialhärten einer oder mehrerer Einprägungen; Belasten des Stahlstrangs derart, dass der Stahlstrang entlang zumindest einer partialgehärteten Einprägung bricht; und Freigeben zumindest einer Klinge aus dem Stahlstrang, wobei die zumindest eine partialgehärtete Einprägung eine Klingenaußenkante bildet.

Mit anderen Worten umfasst das Verfahren das präzise Einprägen von Klingenmustern in einen Stahlstrang und deren gezielte Härtung zur anschließend kontrollierten Klingenfreigabe. Das kontrollierte Brechen entlang der gehärteten Bereiche ermöglicht das effiziente Freigeben von Klingen mit definierten Außenkanten, ohne dass eine umfassende nachträgliche Wärmebehandlung erforderlich ist. Klassische Stahlstränge haben regelmäßig das Problem, für das Klingenvereinzeln härter sein zu müssen, als es die spätere Klinge sein darf, um einen klingenvereinzelnden Sprödbruch überhaupt zu ermöglichen. Nach dem Klingenvereinzeln, also dem Freigeben der Klingen, müssen diese auf die eigentliche Zielhärte wärmebehandelt werden. Hierzu werden sie üblicherweise angelassen. Erst der vorliegende Grundgedanke, nur die Bruchkanten, gebildet durch die Einprägungen, zu härten, also den Stahlstrang partiell zu härten, erlaubt es, den Stahlstrang schon frühzeitig nahe an seine Zielhärte zu bringen und frühzeitig eine gewünschte Duktilität einzubringen. Es wird somit ein zum Stand der Technik alternatives Klingenherstellungsverfahren vorgeschlagen.

Nachfolgend werden vorteilige Aspekte erläutert und weiter nachfolgend bevorzugte modifizierte Ausführungsformen beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Es ist bevorzugt, dass die Reihenfolge von Verfahrensschritten, soweit nicht technisch in einer expliziten Reihenfolge erforderlich, variiert werden kann. Besonders bevorzugt ist jedoch die vorgenannte Reihenfolge der Verfahrensschritte. Beispielsweise kann ein nachfolgend beschriebenes Stahlstrangaußenkantenschleifen bzw. Stahlstranglängskantenschleifen vor oder nach nahezu jedem Verfahrensschritt erfolgen. Wichtig ist allerdings die Reihenfolge des physischen Einprägens, Partialhärtens und Belastens zwecks Klingenfreigabe.

Soweit Ordinalzahlen, zum Beispiel "erste", "zweite", usw., verwendet werden, beispielsweise zur Bezeichnung einer Stahlstranglängskante, so sind diese Ordinalzahlen rein zur Differenzierung in der Bezeichnung vorgesehen und zeigen keine Abhängigkeiten oder Reihenfolgen an. Das heißt insbesondere, dass beispielsweise eine Klinge oder ein Stahlstrang nicht eine "erste Stahlstranglängskante" aufweisen muss, um eine "zweite Stahlstranglängskante" aufzuweisen. Auch kann eine Klinge oder ein Stahlstrang eine "erste Stahlstranglängskante", sowie eine "dritte Stahlstranglängskante" aufweisen, ohne aber zwangsläufig eine "zweite Stahlstranglängskante" aufzuweisen. Es können auch mehrere Einheiten der gleichen Ordinalzahl vorgesehen sein, also beispielsweise mehrere "erste Stahlstranglängskanten".

Insbesondere ist der Stahlstrang als Coil ausgebildet. Ein Coil kann ein industriell hergestelltes, aufgerolltes Metallband sein, das häufig aus Materialien wie Stahl bzw. Edelstahl besteht und aufgrund seiner effizienten Lagerung, Transportfähigkeit und leichten Weiterverarbeitung bevorzugt verwendet wird. Bei der vorliegenden Klingenherstellung dient ein Coil als bevorzugtes Ausgangsmaterial, aus dem Klingenrohlinge gefertigt werden. Das Coil wird zum Freilegen des Stahlstrangs zunächst auf speziellen Maschinen abgewickelt. Dieses abgewickelte Material bildet dann den vorliegenden Stahlstrang. Grundsätzlich weist ein Coil eine Zylinderform auf, also eine Mantelfläche und zwei Stirnflächen.

Insbesondere ist die Klinge eine Schneidklinge, beispielsweise eine Maschinenschneidklinge, bevorzugt mit einer Ausnehmung, besonders bevorzugt mit einem Langloch. Die Klinge kann an mindestens einer oder an zwei Kanten geschliffen sein. Es kann allerdings auch sein, dass die Klinge nicht geschliffen ist. Beispielsweise kann die Klinge dann anstelle einer schneidklingenüblichen Dreiecksform in ebendiesem Bereich eine Rechteckform mit rechten Winkeln aufweisen.

Die Klinge kann einseitig oder beidseitig geschliffen werden, wobei die Schliffe insbesondere entlang der Längserstreckungsachse und/oder entlang der Querachse erfolgen können. Es kann sich um eine Klinge aus einer Legierung handeln oder um ein Bi- oder Trimetall, also eine Klinge aus einem Grundkörper und einem oder mehr angefügten Element/en, insbesondere HSS. Im vorliegenden Sinne bedeutet Bimetall insbesondere, dass ein HSS-Draht bzw. HSS-Strang außenseitig an eine Stahlstrangaußenkante eines Stahlstrangs angefügt und plattgedrückt wird. Trimetall ist dem Grunde nach insbesondere ein erweitertes Bimetall, wobei außenseitig auf zwei Stahlstrangaußenkanten des Stahlstrangs jeweils ein HSS-Draht bzw. HSS-Strang angefügt und plattgedrückt wird, sodass die Klinge dann zwei Schneidkanten aufweisen kann. Bi- und Trimetalle können den Vorteil haben, dass sie Schneidkanten aus einem härteren und länger scharf bleibenden Material bilden können, wohingegen der Grundkörper duktilere Eigenschaften haben kann und Stoßbelastungen besser ausgleichen kann, ohne dass die Klinge beschädigt oder gar zerstört wird.

Beispiele für Klingen sind insbesondere, aber nicht abschließend:
Trapezklinge: Eine Klinge in Trapezform, die häufig in Universalmessern verwendet wird. Sie kann an einer oder beiden Kanten geschliffen sein und besitzt oft ein Langloch zur Befestigung.
Industrieklinge / Maschinenschneidklinge: Klingen für industrielle Anwendungen, die hohen Anforderungen an Haltbarkeit und Schneidleistung gerecht werden. Sie können verschiedene Formen und Schliffe aufweisen.
Abbrechklinge: Eine Klinge mit segmentierten Abschnitten, die nacheinander abgebrochen werden können, um stets eine scharfe Schneidkante zu gewährleisten. Sie ist meist einseitig geschliffen.
Grafikklinge: Feine Klingen für präzise Schneidarbeiten, beispielsweise in der Grafik- oder Modellbaubranche. Sie haben oft eine spitze Form für detaillierte Schnitte.
Styroporklinge: Speziell zum Schneiden von Materialien wie Styropor entwickelt, oft mit besonderen Schliffen oder Formen, um saubere Schnitte zu ermöglichen.
Hakenklinge: Klingen mit hakenförmiger Schneide, ideal zum Schneiden von Teppichen, Folien oder Dachpappe, ohne das darunterliegende Material zu beschädigen.
Bügelklinge: Klingen mit einer besonderen Bügelform für spezifische Schneidaufgaben, beispielsweise in der Verpackungsindustrie oder bei Folienarbeiten.
Spitzklinge: Klingen mit einer spitzen Schneide für präzise und feine Schnitte, häufig in Handwerk und Kunst verwendet.
Skalpellklinge: Sehr scharfe Klingen für medizinische oder feinmechanische Anwendungen, die höchste Präzision erfordern.
Schaberklinge: Klingen zum Entfernen von Beschichtungen oder Verunreinigungen auf Oberflächen, oft mit einer stumpferen Schneide. Längserstreckungsachse, Querachse und Tiefenachse Insbesondere stehen die Längserstreckungsachse, die Querachse und die Tiefenachse im rechten Winkel zueinander, wie bei einem kartesischen Koordinatensystem. Die Längserstreckungsachse verläuft insbesondere entlang der Längserstreckungsachse des abgewickelten Stahlstrangs. Die Querachse verläuft insbesondere entlang der Breite des Stahlstrangs; mit anderen Worten, die Querachse ist am Beispiel eines zu einem Coil gewickelten Stahlstrangs parallel zur Rotationsachse des Coils orientiert. Die Tiefenachse verläuft insbesondere entlang der Materialstärke der späteren Klinge; mit anderen Worten, die Tiefenachse ist am Beispiel eines zu einem Coil gewickelten Stahlstrangs radial zum Coil orientiert.

Die Achsen werden nachfolgend insbesondere mit Bezug zu einem abgewickelten Stahlstrang betrachtet.

Das Frontende ist insbesondere das Ende, welches am Beispiel eines zu einem Coil gewickelten Stahlstrangs das äußere freie Ende des Stahlstrangs bildet. Beim Abwickeln des Coils ist das Frontende das zuerst freigelegte Ende und dient mit Vorzug als Ausgangspunkt für die Verarbeitungsschritte wie Einprägen, Partialhärten, Belasten und/oder Freigeben.

Das Hinterende ist insbesondere das Ende, welches am Beispiel eines zu einem Coil gewickelten Stahlstrangs das innere freie Ende des Stahlstrangs bildet, also nahe der Rotationsachse des Coils. Es stellt das finale Ende des abgewickelten Stahlstrangs dar und markiert den Abschluss des Stahlstrangs, der für die Klingenherstellung zur Verfügung steht.

Die Stahlstrangaußenkanten sind insbesondere am Beispiel eines zu einem Coil gewickelten Stahlstrangs alle vier Außenkanten des Stahlstrangs. Diese umfassen die beiden Stahlstranglängskanten sowie das Frontende und das Hinterende. Sie definieren die äußeren Begrenzungen des Stahlstrangs und können beispielsweise relevant sein für Prozesse wie das Anfügen von HSS-Draht bei Bimetall- oder Trimetallklingen. Wenn eine oder mehrere Klingen freigegeben werden, wandert das Frontende insbesondere in Richtung des Hinterendes, und die beiden Stahlstranglängskanten verkürzen sich entsprechend um die Länge der freigegebenen Klingen.

Die Stahlstranglängskanten sind ein Teil der Stahlstrangaußenkanten und erstrecken sich parallel zueinander vom Frontende zum Hinterende des Stahlstrangs. Am Beispiel eines zu einem Coil gewickelten Stahlstrangs sind dies die beiden Kanten, die beim Abwickeln die seitlichen Begrenzungen bilden. Anders formuliert bilden die beiden Stahlstranglängskanten jene Stirnflächen, die man sieht, wenn man auf eine der beiden Stirnflächen eines zu einem Coil gewickelten Stahlstrangs blickt.

Das physische Einprägen erfolgt entlang einer oder mehrerer vorgesehener Bruchkanten im Stahlstrang. Es kann mit Mitteln nach Stand der Technik durchgeführt werden, beispielsweise durch Stanzen mittels Stanzelementen. Eine Einprägung kann einseitig oder beidseitig am Stahlstrang erfolgen. Insbesondere kann sich die Länge einer Einprägung über die gesamte gewünschte Bruchkante erstrecken oder nur teilweise über diese. Im Falle einer teilweisen Erstreckung kann die Einprägung als Strichlinie ausgeführt sein oder zu einem oder beiden äußeren Enden der gewünschten Bruchkante hin auslaufen, beispielsweise zu einer oder zu beiden späteren Klingenkanten.

Die Tiefe einer Einprägung kann mindestens einschließlich 0,1 Millimeter, bevorzugt mindestens einschließlich 0,2 Millimeter, besonders bevorzugt mindestens einschließlich 0,5 Millimeter betragen. Sie kann höchstens einschließlich 0,7 Millimeter, bevorzugt höchstens einschließlich 0,5 Millimeter, besonders bevorzugt höchstens einschließlich 0,4 Millimeter betragen.

Die Breite einer Einprägung kann mindestens einschließlich 0,1 Millimeter, bevorzugt mindestens einschließlich 0,2 Millimeter, besonders bevorzugt mindestens einschließlich 0,5 Millimeter betragen. Sie kann höchstens einschließlich 0,7 Millimeter, bevorzugt höchstens einschließlich 0,5 Millimeter, besonders bevorzugt höchstens einschließlich 0,4 Millimeter betragen.

Es sind jedoch auch andere Werte möglich; sämtliche vorgenannten Werte können variieren. Zudem sind insbesondere auch Werte gemeint und damit umfasst, welche höchstens einschließlich 10 Prozent von den vorgenannten Werten abweichen.

Das Klingenraster bzw. Klingenmuster kann Klingen aufweisen, die unmittelbar aufeinanderfolgen, etwa wie bei einer Abbrechklinge, oder es kann Restmaterial enthalten. Das Restmaterial kann jeweils auf jede Klinge folgen, bzw. jeweils zwischen zwei Klingen vorhanden sein, beispielsweise bei der Einprägung eines Klingenrasters von Trapezklingen, oder es können mehrere Klingen unmittelbar aufeinanderfolgen und dann folgt Restmaterial, etwa bei Abbrechklingen. Es kann auch sein, dass gar kein Restmaterial anfällt. Anfallendes Restmaterial kann entweder direkt entsorgt bzw. dem Recycling zugeführt werden, wie es bei Trapezklingen der Fall sein kann. Die Trapezklingen werden im späteren Gebrauch selbst fixiert. Alternativ kann das Restmaterial auch dazu dienen, das Klingenmaterial zu halten, etwa bei Abbrechklingen, wo die einzelnen Klingen, wie es der Natur der Abbrechklinge entspricht, nicht fixiert sein dürfen, da sie abbrechbar sein müssen, sobald sie beispielsweise stumpf geworden sind.

Das Klingenraster kann derart ausgebildet sein, dass die Klingen in Längserstreckungsachse und/oder in Querachse aufeinanderfolgen. Hierbei geht es darum, den vorhandenen Stahlstrang abhängig von den gewünschten Klingen möglichst wirtschaftlich zu verwerten und die Menge an Restmaterial möglichst gering zu halten.

Sofern eine Ausführung für eine oder für mehrere Einprägungen erfolgt, so ist im Sinne sämtlicher vorliegender Ausführungen gemeint, dass dies sowohl nur für eine Einprägung als auch für eine Vielzahl von Einprägungen oder gar für jede Einprägung gelten kann.

Das Partialhärten erlaubt es, dass nicht der gesamte Stahlstrang gehärtet wird, sondern nur der Bereich entlang der Einprägungen. Insbesondere wird ein möglichst präzise ausgewählter Bereich um die jeweilige Einprägung herum partialgehärtet, beispielsweise einschließlich jeweils sieben Millimeter um die jeweilige Einprägung, bevorzugt einschließlich jeweils fünf Millimeter, besonders bevorzugt einschließlich jeweils drei Millimeter, ganz besonders bevorzugt einschließlich jeweils zwei Millimeter. Abweichungen von 10 Prozent des jeweiligen Werts sind hiervon insbesondere umfasst.

Es kann mit Vorzug sichergestellt werden, dass der Stahlstrang unter einer Einprägung bzw. zwischen zwei Einprägungen durchgehärtet wird, also entlang der gesamten Materialstärke entlang der Tiefenachse. Ein Partialhärten kann einseitig oder beidseitig am Stahlstrang erfolgen und gilt für eine Einprägung, eine Vielzahl von Einprägungen oder jede Einprägung.

Ein Ergebnis des Partialhärtens ist somit, dass der Stahlstrang unterschiedliche Härtebereiche aufweist, wobei Bereiche mit erhöhter Härte zur Bruchherbeiführung zur Klingenfreigabe nach einem entsprechenden Belasten genutzt werden. Nach dem Freigeben kann bedarfsweise zwingendes Anlassen entfallen, da der Stahlstrang bereits die Klingenzielhärte, zumindest näherungsweise, vorzugsweise vollständig, aufweisen kann.

Beim partiellen Härten mittels Laserstrahlung wird ein Laserstrahl mit präzise eingestellter Leistung und Fokussierung auf die zu härtenden Bereiche der Einprägungen gerichtet, wie am folgenden Beispiel, jedoch nicht limitierend, beschrieben wird. Die hohe Energiedichte des Laserstrahls erhitzt das Material lokal über die kritische Temperatur hinaus, wodurch eine martensitische Umwandlung im erhitzten Bereich eingeleitet wird. Durch die schnelle Selbstabschreckung an der umgebenden, kühleren Materialzone kühlt der erhitzte Bereich rasch ab, was zur Härtung führt. Dieses Verfahren bietet den Vorteil, dass die Laserstrahlung sehr genau positioniert werden kann, was eine exakte Kontrolle der Härtezonen ermöglicht. Aufgrund der lokalen Erwärmung werden umliegende Bereiche kaum beeinflusst, wodurch Verformungen minimiert werden. Da kein physischer Kontakt erforderlich ist, wird der Verschleiß von Werkzeugen vermieden. Zudem eignet sich die Laserhärtung besonders für Anwendungen, bei denen höchste Präzision und Qualität der gehärteten Bereiche gefordert sind.

Beim partiellen Härten mittels Induktionshärtung wird ein wechselndes Magnetfeld erzeugt, um in den zu härtenden Bereichen der Einprägungen Wirbelströme zu induzieren, wie am folgenden Beispiel, jedoch nicht limitierend, beschrieben wird. Diese Wirbelströme führen aufgrund des elektrischen Widerstands des Materials zu einer schnellen und lokalen Erwärmung über die kritische Temperatur hinaus. Nach Erreichen der gewünschten Temperatur wird die Induktion gestoppt, und der erhitzte Bereich kühlt entweder an der Luft oder durch gezieltes Abschrecken ab, was zur Härtung führt. Die Induktionshärtung ermöglicht eine schnelle Erwärmung und kurze Prozesszeiten, wobei die Härtetiefe durch Anpassung der Frequenz, Dauer und/oder Leistung präzise gesteuert werden kann.

Primär verringert die gleichmäßige, vorgenannte Wärmebehandlung das Risiko von Verformungen oder Materialfehlern und verbessert die Reproduzierbarkeit, was ideal für die Serienproduktion mit hohen Stückzahlen ist. Durch diese Härteverfahren wird die Qualität der Bruchkanten verbessert, was zu langlebigeren und leistungsfähigeren Klingen bei reduziertem Herstellungsbedarf führt. Die Wahl zwischen Laserstrahlung und Induktionshärtung kann dabei abhängig von den spezifischen Anforderungen und Rahmenbedingungen der Produktion erfolgen.

Das Belasten des Stahlstrangs erfolgt derart, dass der Stahlstrang entlang zumindest einer partialgehärteten Einprägung bricht bzw. abknickt. Dabei kann das Belasten beispielsweise mit einem Widerlagersystem erfolgen, welches in einfacher oder mehrfacher Ausführung einen Widerlagerpunkt, eine Widerlagerlinie oder eine Widerlagerfläche als Belastungsursprung aufweist.

Das Widerlagersystem kann so ausgestaltet sein, dass immer nur eine freizugebende Klinge belastet wird, oder entsprechende eine Belastungsbeaufschlagung ermöglicht mehrere Klingenfreigaben. Das Belasten als solches ist bereits aus klassischen Klingenherstellungsverfahren bekannt, wobei jedoch vollständig bzw. gleichmäßig auf Bruchhärte durchgehärtete Stahlstränge belastet werden, also Stahlstränge, die nicht partialgehärtet sind.

Ein potenzielles Risiko bei vollständig durchgehärteten Stahlsträngen ist, dass die erhöhte Härte bzw. Sprödigkeit eine Beschädigung des Stahlstrangs und/oder Klingenbruch außerhalb der vorgesehenen Klingenraster herbeiführen kann. Durch das Belasten nur partialgehärteter Stahlstränge kann der Ausschuss reduziert werden.

Das Freigeben zumindest einer Klinge aus dem Stahlstrang hängt eng mit dem Belasten des Stahlstrangs zusammen bzw. resultiert unmittelbar daraus, beispielsweise mittels Klingenabknicken. Die partialgehärtete Einprägung bildet dann eine Klingenaußenkante. Dies ist bevorzugt die finale Klingenaußenkante. Es kann jedoch auch sein, dass diese Klinge nochmals gebrochen wird, sodass sich eine neue Klingenaußenkante bildet.

Das Freigeben als solches ist bereits aus klassischen Klingenherstellungsverfahren bekannt, welche jedoch eine Klingenfreigabe aus vollständig bzw. gleichmäßig auf Bruchhärte durchgehärteten Stahlsträngen vorsehen, also für Stahlstränge, die nicht partialgehärtet sind. Die freigegebene Klinge kann bereits die Zielhärte aufweisen, anders als bei konventionellen Klingenherstellungsverfahren, bei denen nach dem Vereinzeln regelmäßig ein erheblich in die Materialgefügestruktur eingreifendes, energieintensives Wärmebehandlungsverfahren, insbesondere Anlassen, erforderlich ist.

Grundsätzlich kann ein Klingenschliff jederzeit erfolgen, nach Maßnahmen nach Stand der Technik. Vorzugsweise erfolgt der Klingenschliff vor dem Belasten, also noch am Stahlstrang, um das Verletzungsrisiko für Personen zu reduzieren, da ein Stahlstrang besser bzw. sicherer zu handhaben ist als kleinere Klingen.

Alternativ oder zusätzlich kann vorgesehen sein, dass nach dem physischen Einprägen des Klingenrasters in den Stahlstrang ein Thermohärten des Stahlstrangs erfolgt, wobei das Wärmebehandeln bei einer Wärmebehandlungstemperatur erfolgt und ein anschließendes Abschrecken umfasst. Dies trägt dazu bei, eine homogene Härteverteilung im Stahlstrang zu erreichen und die Materialeigenschaften zu optimieren, insbesondere die Festigkeit und Verschleißfestigkeit der später freigegebenen Klingen. Grundsätzlich kann bereits an dieser Stelle, also noch vor dem Freigeben der Klingen, das gewünschte Klingen-Gefüge eingestellt werden. Zwar kann im Anschluss das Material optional durch Anlassprozesse noch entsprechend vergütet werden, jedoch legt das Thermohärten die Zielhärte im Wesentlichen fest. Insbesondere kann nach dem Thermohärten und/oder Stahlstranganlassen ein deutlich weicherer Stahlstrang vorliegen als es bei konventionellen Klingenherstellungsverfahren erforderlich wäre, da die Härte des Stahlstrangs nicht für den Sprödbruch zur Klingenvereinzelung relevant ist. Anders formuliert kann somit die Klingenzielhärte eingestellt werden, ohne dass zwingend die für den Sprödbruch zur Klingenvereinzelung erforderliche Härte erreicht werden muss. Es ist somit beispielsweise nicht erforderlich, dass vollständig bzw. gleichmäßig auf Bruchhärte durchgehärtete Stahlstränge abkühlen, vereinzelt werden und erst anschließend aus der Umgebungstemperatur heraus energieintensiv angelassen werden.

Alternativ oder zusätzlich kann vorgesehen sein, dass die Wärmebehandlungstemperatur im Wesentlichen mindestens einschließlich 800 Grad Celsius, bevorzugt mindestens einschließlich 900 Grad Celsius, besonders bevorzugt mindestens einschließlich 1000 Grad Celsius beträgt. Alternativ oder zusätzlich kann vorgesehen sein, dass sie im Wesentlichen höchstens einschließlich 1300 Grad Celsius, bevorzugt höchstens einschließlich 1250 Grad Celsius, besonders bevorzugt höchstens einschließlich 1200 Grad Celsius beträgt. Eine präzise Temperatureinstellung ermöglicht es, die thermischen Effekte auf den Stahlstrang zu steuern, was insbesondere für die Härte und Duktilität entscheidend ist. Bevorzugt beträgt die Wärmebehandlungstemperatur im Wesentlichen 1150 Grad Celsius. Mit den genannten Temperaturen kann der Stahlstrang bereits zu einem sehr frühen Verarbeitungszeitpunkt, nämlich noch vor dem Klingenvereinzeln, relativ nah an die gewünschte Klingenzielhärte herangeführt werden. Die Wärmebehandlungsdauer orientiert sich an der Materialmasse und/oder -geometrie, wobei mit Vorzug ein vollständiges Durchglühen des gesamten Stahlstrangs erfolgen sollte. Diese Dauer kann beispielsweise zwischen einer und 60 Minuten liegen, wobei fünf Minuten +/- zwei Minuten ein häufig bevorzugter Wert sind. Besonders eignen sich diese Temperaturen für einen Stahlstrang aus Bi- oder Trimetall mit Stahlstranglängskanten mit HSS-Seitenstreifen, beispielsweise 1.3343. Die Formulierung "im Wesentlichen" sieht eine Spannweite von +/- 10 Grad Celsius vor.

Alternativ oder zusätzlich kann vorgesehen sein, dass vor dem Partialhärten der einen oder mehreren Einprägungen ein Stahlstranganlassen des Stahlstrangs bei einer Anlasstemperatur erfolgt. Durch diesen Zwischenschritt wird der Spannungszustand im Material verbessert, und die Struktur des Stahls kann beispielsweise auf die finale Klingenzielhärte eingestellt werden. Optional kann der Stahlstrang noch warm sein, bevorzugt von einem Wärmebehandeln bei einer insbesondere vorgenannten Wärmebehandlungstemperatur, besonders bevorzugt von dem Thermohärten, sodass das Anlassen gegenüber dem Stand der Technik energieoptimiert erfolgen kann.

Ein besonderer Vorteil besteht darin, dass der Stahlstrang auf eine viel duktilere Gefügestruktur eingestellt werden kann als ein Stahlstrang, der nicht gemäß der vorliegenden allgemeinen Grundidee prozessiert wird. Bislang werden Stahlstränge so angelassen, dass ihre Härte nicht unter 58 HRC liegt, da sonst bei der späteren Vereinzelung kein Sprödbruch möglich wäre. Vorliegend kann die Härte beispielsweise auf 45 HRC als Klingenzielhärte reduziert werden, da das partielle Härten der Bruchkanten bzw. der Einprägungen trotz des weicheren Grundkörpers einen Sprödbruch sicherstellt.

Alternativ oder zusätzlich kann vorgesehen sein, dass das physische Einprägen ein Stanzen ist, insbesondere geradliniges Stanzen, das durch Stanzmittel durchgeführt wird. Dieser Ansatz erlaubt eine präzise Herstellung der Einprägungen und garantiert eine gleichbleibend hohe Maßhaltigkeit der Klingen. Weiterhin können die Einprägungen parallel zueinander ausgebildet sein und sich teilweise oder vollständig zwischen den Stahlstrangaußenkanten erstrecken, was die Effizienz der Materialausnutzung steigert und die Form der Klingen optimiert.

Alternativ oder zusätzlich kann vorgesehen sein, dass das physische Einprägen ein Stanzen ist, insbesondere geradliniges Stanzen, das insbesondere durch Stanzmittel durchgeführt wird. Hierbei handelt es sich um eine einfache und somit fehlerunanfällige Maßnahme zum physischen Einprägen des Klingenrasters.

Alternativ oder zusätzlich kann vorgesehen sein, dass mindestens zwei, bevorzugt mehrere, besonders bevorzugt alle Einprägungen parallel zueinander ausgebildet sind. Dies ist eine einfache und somit fehlerunanfällige Maßnahme und kann beispielsweise bei Abbrechklingen, aber auch bei anderen Klingen, beispielsweise Maschinenschneidklingen, vorteilig sein.

Alternativ oder zusätzlich kann vorgesehen sein, dass sich die eine oder mehrere Einprägungen teilweise oder vollständig zwischen den Stahlstrangaußenkanten, insbesondere teilweise oder vollständig zwischen beiden Stahlstranglängskanten, erstreckt oder erstrecken. Während eine vollständige Erstreckung verständlich ist, kann eine teilweise Erstreckung bedeuten, dass die Einprägungen als Strichlinie ausgeführt sind und/oder zu einem und/oder beiden Enden hin nicht bis zum Ende der eigentlichen Bruchkante reichen. Beispielsweise kann bei Bi- oder Trimetallen vorgesehen sein, die zusätzlichen Metallschichten nicht einzuprägen. Bevorzugt können sie jedoch auch eingeprägt sein.

Alternativ oder zusätzlich kann vorgesehen sein, dass wobei eine oder mehrere Einprägungen einen Stahlstranglängsbruch und/oder Stahlstrangquerbruch herbeiführen. Für einen Stahlstranglängsbruch sollte eine Einprägung hauptsächlich entlang einer Längserstreckungsachse verlaufen, insbesondere von einem definierten Frontende bis zu einem definierten Hinterende. Für einen Stahlstrangquerbruch sollte eine Einprägung hauptsächlich entlang einer Querachse verlaufen, insbesondere von einer ersten Stahlstranglängskante bis zu einer zweiten Stahlstranglängskante. Alternativ oder zusätzlich kann vorgesehen sein, dass der Stahlstrang mehrere Einprägungen aufweist, die in einem regelmäßigen Klingenraster zueinander angeordnet sind. Je regelmäßiger ein Klingenraster ist, desto geringer ist ein personalbedingtes Eingreifen erforderlich, wodurch sich die Herstellungseffizienz erhöht.

Alternativ oder zusätzlich kann vorgesehen sein, dass der Stahlstrang entlang der Längserstreckungsachse mehrere äquidistante Einprägungen aufweist. Dies ist besonders bevorzugt für Abbrechklingen, für Maschinenschneidklingen sowie für andere Klingenarten.

Hierbei handelt es sich mithin insbesondere um Merkmale bzw. Maßnahmen, die die Herstellungseffizienz der Klingen noch weiter erhöhen.

Alternativ oder zusätzlich kann vorgesehen sein, dass das Partialhärten der einen oder mehrerer Einprägungen, beispielsweise mittels Laserstrahlung oder mittels Induktionshärtung, bei einer Leistungvon im Wesentlichen mindestens einschließlich 500 W, bevorzugt mindestens einschließlich 10 kW, besonders bevorzugt mindestens einschließlich 12 kW erfolgt.

Alternativ oder zusätzlich kann vorgesehen sein, dass das Partialhärten der einen oder mehrerer Einprägungen, beispielsweise mittels Laserstrahlung oder mittels Induktionshärtung, bei einer Leistung von im Wesentlichen höchstens einschließlich 100 kW, bevorzugt höchstens einschließlich 50 kW, besonders bevorzugt höchstens einschließlich 30 kW erfolgt.

Alternativ oder zusätzlich kann vorgesehen sein, dass das Partialhärten der einen oder mehrerer Einprägungen, beispielsweise mittels Laserstrahlung oder mittels Induktionshärtung, bei einer Leistung von im Wesentlichen 15 kW erfolgt. Die präzise Leistungseinstellung gewährleistet eine kontrollierte Wärmebehandlung der Einprägungen und verbessert die Konsistenz der gehärteten Bereiche für die Klingenvereinzelung, sodass hochwertige Bruchkanten entstehen können. Dies führt zu einer erhöhten Prozesssicherheit, reduziert den Ausschuss und steigert die Effizienz der Produktion. Zudem verbessert sich die Qualität der Endprodukte, da gleichmäßige Härtezonen die Haltbarkeit und Schnittfestigkeit der Klingen erhöhen. Die Formulierung "im Wesentlichen" sieht eine Spannweite von +/- 10 Prozent des jeweiligen Werts vor.

Alternativ oder zusätzlich kann vorgesehen sein, dass das Partialhärten pro Einprägung, beispielsweise mittels Laserstrahlung oder mittels Induktionshärtung, bei einer Härtungsdauervon im Wesentlichen mindestens einschließlich 0,2 Sekunden, bevorzugt mindestens einschließlich 0,3 Sekunden, besonders bevorzugt mindestens einschließlich 0,4 Sekunden erfolgt.

Alternativ oder zusätzlich kann vorgesehen sein, dass das Partialhärten pro Einprägung, beispielsweise mittels Laserstrahlung oder mittels Induktionshärtung, bei einer Härtungsdauer von im Wesentlichen höchstens einschließlich 1,0 Sekunden, insbesondere höchstens einschließlich 0,6 Sekunden, bevorzugt höchstens einschließlich 0,5 Sekunden, besonders bevorzugt höchstens einschließlich 0,4 Sekunden erfolgt.

Alternativ oder zusätzlich kann vorgesehen sein, dass das Partialhärten pro Einprägung, beispielsweise mittels Laserstrahlung oder mittels Induktionshärtung, bei einer Härtungsdauer von im Wesentlichen 0,4 Sekunden erfolgt. Die genaue Dauer des Härtevorgangs kann insbesondere an die Materialdicke und die gewünschte Endhärte angepasst werden, was die Qualität der Klingenvereinzelung und der Bruchkanten erheblich steigert. Durch diese Abstimmung wird sichergestellt, dass die Härte gleichmäßig und kontrolliert in die Einprägungen eingebracht wird, ohne das umliegende Material unnötig zu beeinträchtigen. Dies führt zu saubereren Bruchkanten, reduziert das Risiko von Materialfehlern oder ungewollten Materialabbrüchen und erhöht die Haltbarkeit sowie die Schnittfestigkeit der gefertigten Klingen. Die Formulierung "im Wesentlichen" sieht eine Spannweite von +/- 10 Prozent des jeweiligen Werts vor.

Alternativ oder zusätzlich kann vorgesehen sein, dass wobei das Partialhärten der einen oder mehrerer Einprägungen, beispielsweise mittels Laserstrahlung oder mittels Induktionshärtung, bei einer Frequenz von im Wesentlichen mindestens einschließlich 200 kHz, bevorzugt mindestens einschließlich 250 kHz, besonders bevorzugt mindestens einschließlich 300 kHz erfolgt.

Alternativ oder zusätzlich kann vorgesehen sein, dass das Partialhärten der einen oder mehrerer Einprägungen, beispielsweise mittels Laserstrahlung oder mittels Induktionshärtung, bei einer Frequenz von im Wesentlichen höchstens einschließlich 400 kHz, bevorzugt höchstens einschließlich 350 kHz, besonders bevorzugt höchstens einschließlich 300 kHz erfolgt.

Alternativ oder zusätzlich kann vorgesehen sein, dass das Partialhärten der einen oder mehrerer Einprägungen, beispielsweise mittels Laserstrahlung oder mittels Induktionshärtung, bei einer Frequenz von im Wesentlichen 300 kHz erfolgt. Die Frequenz wird dabei an die geometrischen und physikalischen Eigenschaften des Stahlstrangs angepasst, um eine optimale Eindringtiefe der Wärmeenergie zu erreichen und eine effektive Laserstrahlung oder Induktionshärtung zu ermöglichen. Durch die präzise Einstellung der Frequenz kann die Erwärmung gezielt auf die gewünschten Bereiche konzentriert werden, was die Effizienz des Härteprozesses steigert und die Qualität der gehärteten Zonen verbessert. Eine angemessene Frequenz gewährleistet zudem eine gleichmäßige Härteverteilung und minimiert das Risiko von Überhitzung oder ungleichmäßiger Härtung, was zu verbesserten Materialeigenschaften und einer höheren Haltbarkeit und Schnittfestigkeit der Klingen führt. Die Formulierung "im Wesentlichen" sieht eine Spannweite von +/- 10 Prozent des jeweiligen Werts vor.

Alternativ oder zusätzlich kann vorgesehen sein, zwischen den Schritten Partialhärten der einen oder mehrerer Einprägungen und Belasten des Stahlstrangs ein Stahlstrangaußenkantenschleifen des Stahlstrangs erfolgt, insbesondere ein Stahlstranglängskantenschleifen des Stahlstrangs entlang der Längserstreckungsachse erfolgt. Dabei werden insbesondere mindestens eine Stahlstranglängskante, bevorzugt beide Stahlstranglängskanten geschliffen. Diese Maßnahme erfolgt insbesondere am Stahlstrang, also vor der Klingenfreigabe, und gewährleistet gegenüber dem Schleifen einzelner Klingen eine verbesserte Schliffoberflächenqualität, wodurch die Klingenqualität erhöht wird. Vorzugsweise wird dieser Schritt so spät wie möglich im gesamten Prozess durchgeführt, um das Verletzungsrisiko für Personen zu reduzieren, besonders bevorzugt als unmittelbarer Verfahrensschritt vor dem Belasten des Stahlstrangs.

Alternativ oder zusätzlich kann vorgesehen sein, dass das Belasten ein mechanisches Belasten ist, wobei das Brechen des Stahlstrangs entlang der zumindest einen partialgehärteten Einprägung insbesondere mittels Knicken erfolgt. Diese Methode kann besonders effizient sein und eine präzise Freigabe der Klingen ermöglichen. Dabei kann das Belasten beispielsweise mit einem Widerlagersystem erfolgen, welches in einfacher oder mehrfacher Ausführung einen Widerlagerpunkt, eine Widerlagerlinie oder eine Widerlagerfläche als Belastungsursprung aufweist. Das Widerlagersystem kann so ausgestaltet sein, dass immer nur eine freizugebende Klinge belastet wird oder eine Belastungsbeaufschlagung ermöglicht mehrere Klingenfreigaben gleichzeitig. Das Belasten als solches ist bereits aus klassischen Klingenherstellungsverfahren bekannt, wobei jedoch vollständig bzw. gleichmäßig auf Bruchhärte durchgehärtete Stahlstränge belastet werden, also Stahlstränge, die nicht partialgehärtet sind. Durch die Verwendung von partialgehärteten Einprägungen kann das Risiko von Beschädigungen oder Bruch des Stahlstrangs außerhalb der vorgesehenen Klingenraster reduziert werden, wodurch der Ausschuss minimiert und die Effizienz des Verfahrens erhöht werden kann.

Alternativ oder zusätzlich kann vorgesehen sein, dass das Belasten des Stahlstrangs derart erfolgt, dass der Stahlstrang ausschließlich an der zur Belastungsquelle nächsten Einprägung bricht und genau eine Klinge freigibt. Dies erhöht die Kontrollierbarkeit des Verfahrens und kann den Abfall durch Fehlabbrüche minimieren. Durch das gezielte Brechen ausschließlich an der zur Belastungsquelle nächsten Einprägung wird die Präzision beim Freigeben der Klingen verbessert. Dies kann zu einer effizienteren Produktion führen, da ungewollte Brüche an anderen Stellen des Stahlstrangs vermieden werden. Zudem können Materialverluste reduziert und die Produktqualität gesteigert werden, da die Klingen kontrolliert und exakt freigegeben werden. Die verbesserte Prozesskontrolle kann auch die Sicherheit erhöhen, indem unvorhergesehene Bruchstellen und damit verbundene Risiken für Personal und Ausrüstung verringert werden.

Alternativ oder zusätzlich kann vorgesehen sein, dass das Belasten des Stahlstrangs derart erfolgt, dass der Stahlstrang an der zur Belastungsquelle nächsten Einprägung sowie an darauf folgenden Einprägungen bricht und gleichzeitig mehrere Klingen freigibt. Diese Variante kann die Effizienz bei der Massenproduktion von Klingen erheblich steigern, da durch das gleichzeitige Freigeben mehrerer Klingen die Produktionsgeschwindigkeit erhöht und der Durchsatz gesteigert werden kann. Zudem können Rüstzeiten reduziert und der Produktionsprozess insgesamt optimiert werden, was zu einer Senkung der Herstellungskosten führt. Durch das koordinierte Brechen an mehreren Einprägungen werden auch der Materialfluss verbessert und potenzielle Engpässe im Produktionsablauf minimiert. Allerdings kann es erforderlich sein, das Widerlagersystem entsprechend anzupassen, um die gleichzeitige Belastung mehrerer Bereiche zu ermöglichen und dennoch eine hohe Präzision bei der Klingenfreigabe sicherzustellen. Mithin kann diese Maßnahme die Herstellungseffizienz steigern.

Alternativ oder zusätzlich kann vorgesehen sein, dass die Klinge eine Schneidklinge ist, beispielsweise eine Maschinenschneidklinge, die bevorzugt mit mindestens einer Ausnehmung, besonders bevorzugt mit mindestens einem Langloch, zur Klingenhalterung ausgestattet ist. Die Ausnehmung kann die Montage erleichtern und die Funktionalität der Klinge erhöhen, indem sie eine einfachere und sicherere Befestigung in verschiedenen Halterungssystemen ermöglicht. Durch die mindestens eine Ausnehmung, besonders bevorzugt ein Langloch, kann die Klinge flexibel positioniert und justiert werden, was die Anpassungsfähigkeit an unterschiedliche Maschinen oder Werkzeuge verbessert. Optional kann dies auch die Kompatibilität mit vorhandenen Klingenhaltern erhöhen und/oder den Austausch der Klinge beschleunigen, wodurch Ausfallzeiten reduziert werden. Darüber hinaus kann die Ausnehmung dazu beitragen, das Gewicht der Klinge zu verringern, ohne ihre Stabilität oder Schneidleistung zu beeinträchtigen, was die Effizienz steigern kann.

Alternativ oder zusätzlich kann vorgesehen sein, dass der Stahlstrang, insbesondere als Coil ausgebildet, aus einer einzigen Legierung besteht.

Alternativ oder zusätzlich kann vorgesehen sein, dass der Stahlstrang, insbesondere als Coil ausgebildet, aus einem Bimetall oderTrimetall besteht, wobei der Stahlstrang einen Grundkörper aus einem Werkzeugstahl, beispielsweise 1.8159, aufweist und stahlstranglängskantenorientiert einseitig oder beidseitig einen HSS-Seitenstreifen, beispielsweise 1.3343, zum Stahlstrangaußenkantenschleifen aufweist. Diese Materialkombination kann die Eigenschaften der Klinge für spezifische Anwendungen optimieren. Durch die Verwendung eines Grundkörpers aus Werkzeugstahl, beispielsweise 1.8159, wird eine robuste und zähe Basis geschaffen, die eine gute Duktilität und Belastbarkeit aufweist. Die stahlstranglängskantenorientierte einseitige oder beidseitige Anordnung eines HSS-Seitenstreifens, beispielsweise 1.3343, ermöglicht es, die Schneidkanten mit hoher Härte und Verschleißfestigkeit auszustatten. Dies kann die Haltbarkeit der Klinge erheblich erhöhen.

Optional kann diese Materialkombination die Wärmebehandlung und das Stahlstrangaußenkantenschleifen vereinfachen, da die unterschiedlichen Materialien spezifisch auf ihre Eigenschaften hin behandelt werden können. Durch die Kombination der zähen Eigenschaften des Werkzeugstahls mit der hohen Härte des HSS-Stahls können Klingen hergestellt werden, die sowohl robust als auch extrem scharf und langlebig sind. Dies ist besonders vorteilhaft in Anwendungen, die hohe Anforderungen an die Schnittqualität und die Lebensdauer der Klinge stellen, wie beispielsweise in der Metallverarbeitung oder in der Holzbearbeitung sowie bei anderen stoßanfälligen Schnittaktivitäten.

Darüber hinaus kann die Verwendungvon Bimetall- oder Trimetall-Stahlsträngen die Flexibilität in der Produktion erhöhen, da Klingen mit spezifischen Eigenschaften für unterschiedliche Einsatzgebiete gefertigt werden können. Die Materialkombination ermöglicht es, die Klingen an die besonderen Anforderungen verschiedener Schneidaufgaben anzupassen, was die Effizienz steigern und die Kosten senken kann. Insgesamt kann diese Materialzusammensetzung dazu beitragen, die Leistungsfähigkeit und Wirtschaftlichkeit der Klingenproduktion zu verbessern.

Alternativ oder zusätzlich kann vorgesehen sein, dass das Thermohärten den Stahlstrang auf eine Klingenzielhärte einstellt, wobei die Zielhärte des Grundkörpers im Wesentlichen 450 HV 1 beträgt, während insbesondere bei Bi- oder Trimetallen zudem die Zielhärte der HSS-Seitenstreifen im Wesentlichen 760 HV 1 beträgt. Dies kann eine ausgewogene Kombination aus Härte und Zähigkeit ermöglichen.

Die Härtewerte im Sinne dieser Offenbarung können insbesondere gemäß dem Vickers-Härteprüfverfahren bestimmt werden, wie es in den Normen EN ISO 6507-1 bis EN ISO 6507-4 in ihrer zum Anmeldetag gültigen Fassung festgelegt ist. Die Bestimmung solcher Härtewerte kann beispielsweise bei einer Prüfkraft von 1 Kilopond und einer Einwirkdauer der Prüfkraft von 10 bis 15 Sekunden erfolgen.

Durch die Einstellung der Zielhärte des Grundkörpers auf im Wesentlichen 450 HV 1 wird eine ausreichende Zähigkeit und Flexibilität gewährleistet, was die Widerstandsfähigkeit gegen Bruch und Verformung erhöht. Gleichzeitig wird insbesondere bei Bi- oder Trimetallen die Zielhärte der HSS-Seitenstreifen auf im Wesentlichen 760 HV 1 eingestellt, was zu einer hohen Schneidkantenschärfe und Verschleißfestigkeit führt.

Diese Materialkombination ermöglicht es, die Vorteile beider Eigenschaften zu nutzen: Der zähe Grundkörper bietet Stabilität und Bruchsicherheit, während die harten HSS-Seitenstreifen eine hervorragende Leistungsfähigkeit der Klinge gewährleisten. Dadurch kann die Stoßfestigkeit der Klingen erhöht und die Effizienz in der Anwendung gesteigert werden. Optional kann diese Kombination die Klinge an spezifische stoßanfällige Anforderungen verschiedener Schneidaufgaben anpassen, indem sie ein Gleichgewicht zwischen Härte und Zähigkeit bietet, das je nach Bedarf justiert werden kann.

Zudem kann diese ausgewogene Härteverteilung die Belastbarkeit der Klinge erhöhen und das Risiko von Ausbrüchen oder Beschädigungen der Schneidkante reduzieren. Dies führt zu einer höheren Zuverlässigkeit und Qualität der Klinge im praktischen Einsatz. Die präzise Einstellung der Härtegrade ermöglicht es auch, die Wärmebehandlungsprozesse zu optimieren und Energie zu sparen, da nur die erforderlichen Bereiche auf die jeweilige Zielhärte aufzuweisen haben.

Insgesamt kann diese Materialzusammensetzung dazu beitragen, die Leistungsfähigkeit und Wirtschaftlichkeit der Klingenproduktion zu verbessern, indem sie eine Klinge liefert, die sowohl robust als auch scharf und langlebig ist. Die Formulierung "im Wesentlichen" sieht eine Spannweite von +/- 10 Prozent des jeweiligen Werts vor.

Im vorliegenden Sinne bedeutet Bimetall beispielsweise, dass ein HSS-Draht, bekannt als High-Speed Steel oder auch Schnellarbeitsstahl, außenseitig an eine Stahlstrangaußenkante des Stahlstrangs angefügt und plattgedrückt wird. Durch diese Maßnahme wird der Grundkörper des Stahlstrangs, der aus einem zähen bzw. duktilen Material besteht, mit einer harten und verschleißfesten Schneidkante aus HSS-Stahl kombiniert. Dies verbessert die Stoßfestigkeit und Haltbarkeit der Klinge, ohne die Flexibilität des Grundmaterials zu beeinträchtigen.

Trimetall ist insbesondere eine Erweiterung des Bimetalls. Hierbei werden beispielsweise auf beiden Stahlstrangaußenkanten des Stahlstrangs jeweils ein HSS-Draht angefügt und plattgedrückt. Dadurch erhält die Klinge zwei hochfeste Schneidkanten, was besonders vorteilhaft für Anwendungen ist, die beidseitige Schneidfunktionen erfordern. Diese Konstruktion ermöglicht es, die Vorteile eines zähen Grundkörpers mit der hohen Härte und Verschleißfestigkeit von HSS-Stahl an beiden Schneidkanten zu vereinen.

Diese Materialkombinationen können die Eigenschaften der Klinge für spezifische Anwendungen optimieren, indem sie eine ausgewogene Balance zwischen Zähigkeit und Härte bieten. Sie ermöglichen es, die Klingen an besondere Anforderungen verschiedener Schneidaufgaben anzupassen und die Effizienz sowie die Lebensdauer der Klingen zu erhöhen.

Ein weiterer Aspekt stellt auf eine Klinge ab, hergestellt durch ein vorgenanntes Verfahren. Dabei weist jede durch eine partialgehärtete Einprägung gebildete Klingenaußenkante einen Härtungsbereich auf, der insbesondere eine höhere Härte aufweist als das Klingengrundmaterial. Als Klingengrundmaterial gilt insbesondere nicht gehärteter Klingenbereich. Dies verleiht der Klinge eine erhöhte Stoßfestigkeit, ohne die Zähigkeit des Grundkörpers zu beeinträchtigen. Dadurch kann die Klinge im Vergleich zu konventionellen Klingen in einem erweiterten Anwendungsbereich eingesetzt werden, beispielsweise in Situationen, in denen die Klinge Stößen oder unvorhersehbaren Erschütterungen ausgesetzt ist.

Alternativ oder zusätzlich kann vorgesehen sein, dass der Härtungsbereich von der partialgehärteten Einprägung bis hin zu einer von der entsprechenden Einprägung entfernten Kante des Härtungsbereichs höchstens sieben Millimeter, bevorzugt höchstens fünf Millimeter, besonders bevorzugt höchstens drei Millimeter, und ganz besonders bevorzugt höchstens zwei oder einen Millimeter beträgt. Alternativ oder zusätzlich kann vorgesehen sein, dass der Härtungsbereich von der partialgehärteten Einprägung bis hin zu einer von der entsprechenden Einprägung entfernten Kante des Härtungsbereichs mindestens 0,1 Millimeter, bevorzugt mindestens 0,5 Millimeter, besonders bevorzugt mindestens einen Millimeter, und ganz besonders bevorzugt mindestens zwei oder drei Millimeter beträgt. Abweichungen von einschließlich 10 Prozent zum jeweiligen Werten gelten insbesondere als unter den entsprechenden Wert fallend. Insbesondere verläuft die von der jeweiligen Einprägung entfernte Kante des Härtungsbereichs insbesondere im Wesentlichen parallel zur entsprechenden Einprägung. Im Wesentlichen bedeutet hierbei eine Winkelabweichung von etwa 10 Grad zu der entsprechenden Einprägung. Diese Härtungsbereichswerte sind besonders zweckdienlich für multifunktionale Klingen oder Klingen, die unvorhergesehenen Erschütterungen ausgesetzt sind. Die präzise Dimensionierung des Härtungsbereichs trägt zur Optimierung der Härte- und Zähigkeitsbalance der Klinge bei und ermöglicht eine gezielte Anpassung an spezifische Einsatzanforderungen.

### Kurze Beschreibung der Zeichnungen

Nachfolgend wird eine bevorzugte technische Lösung unter Bezugnahme auf die anliegenden Zeichnungen anhand bevorzugter Ausführungsbeispiele näher erläutert. Die Formulierung "Figur" ist in den Zeichnungen mit "Fig." abgekürzt.

In den Zeichnungen zeigen
- Fig. 1: eine Anordnung einer Längserstreckungsachse, Querachse und Tiefenachse, betreffend die Figuren 2 bis 4;
- Fig. 2: eine Draufsicht auf einen Abbrechklingen-Stahlstrang gemäß einer ersten Ausführungsform;
- Fig. 3: eine Draufsicht auf einen Trapezklingen-Stahlstrang gemäß einer zweiten Ausführungsform; und
- Fig. 4: eine aus dem Trapezklingen-Stahlstrang gemäß Fig. 3 herausgelöste Trapezklinge.

### Detaillierte Beschreibung der Zeichnungen

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wird, kann eigenständig oder in Kombination mit anderen Merkmalen in einem beliebigen anderen Ausführungsbeispiel genutzt werden. Jedes Merkmal, das für ein Ausführungsbeispiel einer bestimmten Anspruchskategorie beschrieben wird, kann auch in entsprechender Weise in einem Ausführungsbeispiel einer anderen Anspruchskategorie eingesetzt werden.

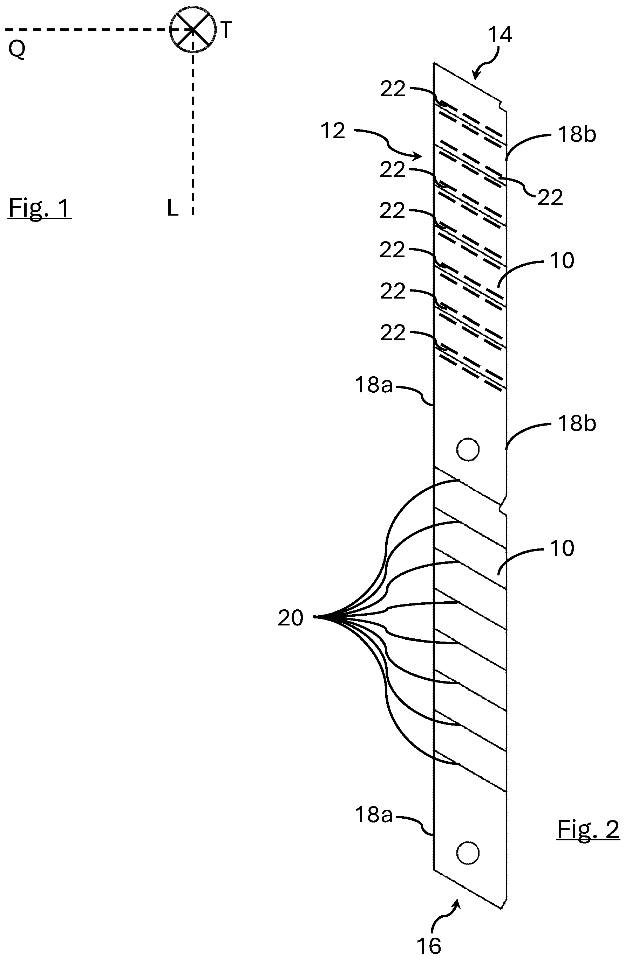

Figur 1 zeigt eine Anordnung der Längserstreckungsachse L, der Querachse Q und der Tiefenachse T. Diese Achsen sind, wie in einem kartesischen Koordinatensystem, in 90-Grad-Winkeln zueinander angeordnet. Diese Anordnung gilt für die nachfolgenden
Figuren 2 bis 4 und ist insbesondere auch unabhängig von den Figuren für die beanspruchten Verfahrens- und Klingenmerkmale relevant. Sofern ein Stahlstrang aus einem Coil resultiert, gilt die Achsanordnung für einen ausgewickelten Stahlstrang 12.

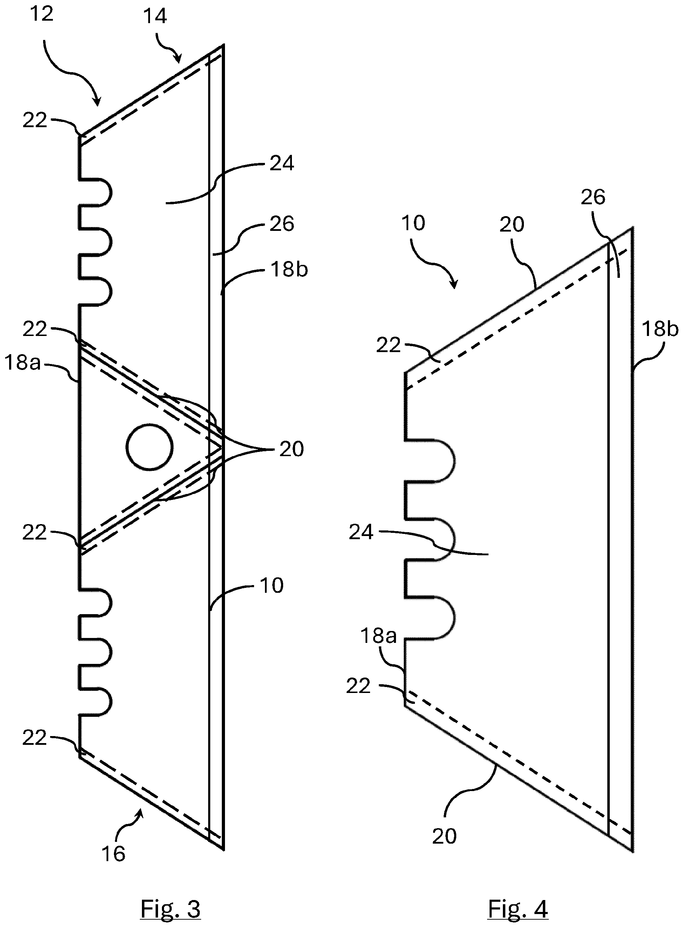

Die Figuren 2 und 3 zeigen jeweils Stahlstränge 12, während Figur 4 eine Klinge 10 darstellt. Alle Elemente unterliegen, in unterschiedlichen Verfahrensschritten prozessiert, einem Verfahren zur Herstellung der Klinge 10 aus dem Stahlstrang 12, der sich entlang der Längserstreckungsachse L, der Querachse Q und der Tiefenachse T erstreckt. Der Stahlstrang 12 weist ein Frontende 14, ein Hinterende 16 sowie parallele Stahlstranglängskanten 18a und 18b auf. Das Verfahren umfasst mindestens die folgenden Schritte:
Physisches Einprägen 100 eines Klingenrasters mittels Einprägungen 20 in den Stahlstrang 12;
Partialhärten 200 der Einprägungen 20;
Belasten 300 des Stahlstrangs 12, sodass dieser entlang mindestens einer partialgehärteten Einprägung 20 bricht; und
Freigeben 400 zumindest einer Klinge 10 aus dem Stahlstrang 12, wobei diese partialgehärtete Einprägung 20 eine Klingenaußenkante bildet.

Die Ergebnisse dieser Schritte werden in den Figuren 2 bis 4 dargestellt und illustrieren den Prozess der Klingenherstellung aus dem Stahlstrang 12.

Figur 2 zeigt einen Abbrechklingen-Stahlstrang 12, der geeignet ist, zwei Abbrechklingen 10 freizugeben. Bei beiden Abbrechklingen 10 wurde bereits das physische Einprägen 100 eines Klingenrasters in den Stahlstrang 12 durchgeführt, sodass dieser als Abbrechklingen-Stahlstrang 12 erkennbar ist. Wie die dargestellten Härtungsbereiche 22 andeuten, wurde bei der oberen Abbrechklinge 10 bereits das Partialhärten 200 der Einprägungen 20 vorgenommen; bei der unteren Abbrechklinge 10 hingegen noch nicht.

Das Partialhärten ermöglicht es, dass nicht der gesamte Stahlstrang 12 gemäß den Figuren 2 und 3 gehärtet wird, sondern nur ein jeweiliger Härtungsbereich 22 entlang der entsprechenden Einprägungen 20. Sofern ein Partialhärten 200 einer oder mehrerer Einprägungen 20 genannt wird, so impliziert dies unmittelbar, dass der Härtungsbereich 22 entlang der entsprechenden Einprägungen 20 gehärtet wird. Der Härtungsbereich 22 wird um die jeweilige Einprägung 20 herum partialgehärtet, beispielsweise um jeweils sieben Millimeter, bevorzugt um jeweils fünf Millimeter, besonders bevorzugt um jeweils drei Millimeter, und ganz besonders bevorzugt um jeweils zwei Millimeter. Möglich ist auch ein Bereich von jeweils einem Millimeter.

Die Formulierung "jeweils" verdeutlicht, dass sich der angegebene Millimeterbetrag pro Klinge 10 auf beide Seiten jeder Einprägung 20 erstreckt; also einerseits geht der Millimeterbetrag in Richtung der Klinge 10 und andererseits in eine benachbarte Klinge 10 oder in ein benachbartes Restmaterial. Anders ausgedrückt handelt es sich um den Betrag, um den sich der Härtungsbereich 22 anteilig in Längserstreckungsachse L und Querachse Q orthogonal von der jeweiligen Einprägung 20 weg in die Klinge 10 hinein erstreckt.

Insbesondere verläuft die von der jeweiligen Einprägung 20 entfernte Kante des Härtungsbereichs 22 im Wesentlichen parallel zur entsprechenden Einprägung 20. Für die gesamte Breite des Härtungsbereichs 22 nach obiger Dimensionierung im Stahlstrang 12 ist der für die Klinge 10 genannte Millimeterbetrag daher zu verdoppeln. Mit Vorzug verläuft jeder Härtungsbereich 22 gleichmäßig dimensioniert, insbesondere gleichmäßig stegförmig, entlang der entsprechenden Einprägung 20.

Die Figuren 2 und 3 zeigen jeweils einen Stahlstrang 12, der sich entlang der Längserstreckungsachse L, der Querachse Q und der Tiefenachse T erstreckt. Der Stahlstrang 12 verfügt über ein Frontende 14 und ein entferntes Hinterende 16, die beide entlang der Längserstreckungsachse L voneinander entfernt sind. Zudem besitzt der Stahlstrang 12 zwei parallele Stahlstranglängskanten 18a und 18b, die als Stahlstrangaußenkanten fungieren und sich jeweils vom Frontende 14 bis zum Hinterende 16 erstrecken.

Die durch die Stahlstrangaußenkanten 18a und 18b aufgespannte Ebene, bestehend aus Frontende 14, Hinterende 16 sowie den beiden parallelen Längskanten 18a und 18b, bildet in Figur 2 mittels Einprägungen 20 ein Klingenraster für zwei Abbrechklingen und in Figur 3 ein Klingenraster für zwei Trapezklingen nebst dazwischen befindlichem Restmaterial.

Jeder Härtungsbereich 22 ist vorzugsweise gleichmäßig dimensioniert, insbesondere gleichmäßig stegförmig, entlang der entsprechenden Einprägung 20 angeordnet. Diese gleichmäßige Dimensionierung des Härtungsbereichs 22 trägt zur konsistenten Härteverteilung bei und ermöglicht eine zuverlässige Freigabe der Klingen 10.

In Figur 2 sind die Einprägungen 20 des Stahlstrangs 12 parallel zueinander ausgebildet und erstrecken sich zwischen den Stahlstranglängskanten 18a und 18b. Der Stahlstrang 12 weist entlang der Längserstreckungsachse L mehrere äquidistante Einprägungen 20 auf, die gleichmäßig verteilt sind und als Klingenraster für die Herstellung der Abbrechklingen 10 dienen.

Figur 3 verdeutlicht, dass die Einprägungen 20 des Stahlstrangs 12 in einem regelmäßigen Klingenraster angeordnet sind. Der Stahlstrang 12 verfügt entlang der Längserstreckungsachse L über mehrere äquidistante Einprägungen 20, wobei sich jede zweite Einprägung 20 gleicht. Diese Anordnung gewährleistet eine gleichmäßige und effiziente Freigabe der Trapezklingen 10 aus dem Stahlstrang 12 bei möglichst wenig Restmaterial.

In Figur 3 ist ferner angedeutet, dass zwischen dem Partialhärten 200 und dem Belasten 300 des Stahlstrangs 12 ein Schleifen einer Stahlstranglängskante 18b erfolgt ist. Wenn anschließend das mechanische Belasten 300 des Stahlstrangs 12 erfolgt, wobei das Brechen entlang einer partialgehärteten Einprägung 20 durch Knicken herbeigeführt wird, wird die Klinge 10 freigegeben, wie in Figur 4 als Trapezklinge dargestellt.

Diese Methode kann besonders effizient sein und eine präzise Freigabe der Klingen gewährleisten. Durch das kontrollierte Brechen entlang der partialgehärteten Einprägungen wird die Freigabe der Klingen genau gesteuert, was die Kontrollierbarkeit des Verfahrens erhöht und den Abfall durch Fehlabbrüche minimiert. Dadurch wird die Qualität der Klingen verbessert und die Produktionskosten reduziert.

Wie in den Figuren gezeigt, handelt es sich bei der Klinge 10 um eine Schneidklinge, genauer gesagt um eine Maschinenschneidklinge.

In den Figuren 3 und 4 wird angedeutet, dass der Stahlstrang 12 bzw. die daraus vereinzelte Klinge 10 als Bimetall ausgebildet ist, wobei ein Grundkörper 24 aus Werkzeugstahl besteht und ein HSS-Seitenstreifen 26 an der Stahlstranglängskante 18b angebracht ist. Diese Materialkombination kann die Härte und Zähigkeit der Klingen optimieren und ihre Leistung in verschiedenen Anwendungen verbessern.

Figur 4 zeigt eine Trapezklinge 10, die aus dem Trapezklingen-Stahlstrang 12 freigegeben wurde. Erkennbar weist die Trapezklinge 10 einen Grundkörper 24 und an ihrer zweiten Stahlstranglängskante 18a einen HSS-Seitenstreifen 26 auf.

### Bezugszeichenliste

- 10: Klinge
- 12: Stahlstrang
- 14: Frontende
- 16: Hinterende
- 18a: Stahlstranglängskante (erste)
- 18b: Stahlstranglängskante (zweite)
- 20: Einprägung
- 22: Härtungsbereich
- 24: Grundkörper
- 26: HSS-Seitenstreifen
- 100: Physisches Einprägen eines Klingenrasters in den Stahlstrang
- 110: Thermohärten des Stahlstrangs
- 120: Stahlstranganlassen des Stahlstrangs
- 130: Stahlstrangaußenkantenschleifen
- 135: Stahlstranglängskantenschleifen
- 200: Partialhärten einer oder mehrerer Einprägungen
- 300: Belasten des Stahlstrangs
- 400: Freigeben zumindest einer Klinge

- L: Längserstreckungsachse
- Q: Querachse
- T: Tiefenachse

## Patentansprüche

1. Verfahren zum Herstellen einer Klinge (10) aus einem Stahlstrang (12) mit einer Längserstreckungsachse (L), einer Querachse (Q) und einer Tiefenachse (T), wobei der Stahlstrang (12) ein Frontende (14) und ein Hinterende (16) aufweist, und wobei der Stahlstrang (12) Stahlstrangaußenkanten mit zwei parallelen Stahlstranglängskanten (18a, 18b) aufweist, die sich jeweils von dem Frontende (14) bis zum Hinterende (16) erstrecken, das Verfahren aufweisend mindestens folgende Schritte:
Physisches Einprägen (100) eines Klingenrasters in den Stahlstrang (12), sodass der Stahlstrang (12) eine oder mehrere Einprägungen (20) aufweist, wobei das Klingenraster eine Vielzahl von Klingen (10) abbildet;
Partialhärten (200) einer oder mehrerer Einprägungen (20);
Belasten (300) des Stahlstrangs (12) derart, dass der Stahlstrang (12) entlang zumindest einer partialgehärteten Einprägung (20) bricht; und
Freigeben (400) zumindest einer Klinge (10) aus dem Stahlstrang (12), wobei die zumindest eine partialgehärtete Einprägung (20) eine Klingenaußenkante bildet.

2. Verfahren nach Anspruch 1,
wobei nach dem physischen Einprägen (100) des Klingenrasters in den Stahlstrang (12) ein Thermohärten (110) des Stahlstrangs (12) erfolgt, wobei das Thermohärten (110) ein Wärmebehandeln bei einer Wärmebehandlungstemperatur (T_H) und anschließendes Abschrecken umfasst.

3. Verfahren nach Anspruch 2,
wobei die Wärmebehandlungstemperatur (T_H) im Wesentlichen mindestens einschließlich 800 Grad Celsius, bevorzugt im Wesentlichen mindestens einschließlich 900 Grad Celsius, besonders bevorzugt im Wesentlichen mindestens einschließlich 1000 Grad Celsius beträgt; und/oder
wobei die Wärmebehandlungstemperatur (T_H) im Wesentlichen höchstens einschließlich 1300 Grad Celsius, bevorzugt im Wesentlichen höchstens einschließlich 1250 Grad Celsius, besonders bevorzugt im Wesentlichen höchstens einschließlich 1200 Grad Celsius beträgt; und/oder
wobei die Wärmebehandlungstemperatur (T_H) im Wesentlichen 1150 Grad Celsius beträgt.

4. Verfahren nach einem der vorhergehenden Ansprüche,
wobei vor dem Partialhärten (200) der einen oder der mehreren Einprägungen (20) ein Stahlstranganlassen (120) des Stahlstrangs (12) bei einer Anlasstemperatur (T_A) erfolgt.

5. Verfahren nach einem der vorhergehenden Ansprüche,
wobei das physische Einprägen (100) ein Stanzen ist, insbesondere geradliniges Stanzen, das insbesondere durch Stanzmittel durchgeführt wird; und/oder
wobei mindestens zwei, bevorzugt mehrere, besonders bevorzugt alle Einprägungen (20) parallel zueinander ausgebildet sind; und/oder
wobei sich die eine oder mehrere Einprägungen (20) teilweise oder vollständig zwischen den Stahlstrangaußenkanten, insbesondere teilweise oder vollständig zwischen beiden Stahlstranglängskanten (18a, 18b), erstreckt oder erstrecken, und/oder
wobei eine oder mehrere Einprägungen (20) einen Stahlstranglängsbruch und/oder Stahlstrangquerbruch herbeiführen; und/oder
wobei der Stahlstrang (12) mehrere Einprägungen (20) aufweist, die in einem regelmäßigen Klingenraster zueinander angeordnet sind; und/oder
wobei der Stahlstrang (12) entlang der Längserstreckungsachse (L) mehrere äquidistante Einprägungen (20) aufweist.

6. Verfahren nach einem der vorhergehenden Ansprüche,
wobei das Partialhärten (200) der einen oder mehrerer Einprägungen (20), beispielsweise mittels Laserstrahlung oder mittels Induktionshärtung, bei einer Leistung von im Wesentlichen mindestens einschließlich 500 W, bevorzugt mindestens einschließlich 10 kW, besonders bevorzugt mindestens einschließlich 12 kW erfolgt; und/oder
wobei das Partialhärten (200) der einen oder mehrerer Einprägungen (20), beispielsweise mittels Laserstrahlung oder mittels Induktionshärtung, bei einer Leistung von im Wesentlichen höchstens einschließlich 100 kW, bevorzugt höchstens einschließlich 50 kW, besonders bevorzugt höchstens einschließlich 30 kW erfolgt; und/oder
wobei das Partialhärten (200) der einen oder mehrerer Einprägungen (20), beispielsweise mittels Laserstrahlung oder mittels Induktionshärtung, bei einer Leistung von im Wesentlichen 15 kW erfolgt.

7. Verfahren nach einem der vorhergehenden Ansprüche,
wobei das Partialhärten (200) pro Einprägung (20), beispielsweise mittels Laserstrahlung oder mittels Induktionshärtung, bei einer Härtungsdauer von im Wesentlichen mindestens einschließlich 0,2 Sekunden, bevorzugt mindestens einschließlich 0,3 Sekunden, besonders bevorzugt mindestens einschließlich 0,4 Sekunden erfolgt; und/oder
wobei das Partialhärten (200) pro Einprägung (20), beispielsweise mittels Laserstrahlung oder mittels Induktionshärtung, bei einer Härtungsdauer von im Wesentlichen höchstens einschließlich 1,0 Sekunden, insbesondere höchstens einschließlich 0,6 Sekunden, bevorzugt höchstens einschließlich 0,5 Sekunden, besonders bevorzugt höchstens einschließlich 0,4 Sekunden erfolgt; und/oder
wobei das Partialhärten (200) pro Einprägung (20), beispielsweise mittels Laserstrahlung oder mittels Induktionshärtung, bei einer Härtungsdauer von im Wesentlichen 0,4 Sekunden erfolgt.

8. Verfahren nach einem der vorhergehenden Ansprüche,
wobei das Partialhärten (200) der einen oder mehrerer Einprägungen (20), beispielsweise mittels Laserstrahlung oder mittels Induktionshärtung, bei einer Frequenz von im Wesentlichen mindestens einschließlich 200 kHz, bevorzugt mindestens einschließlich 250 kHz, besonders bevorzugt mindestens einschließlich 300 kHz erfolgt; und/oder
wobei das Partialhärten (200) der einen oder mehrerer Einprägungen (20), beispielsweise mittels Laserstrahlung oder mittels Induktionshärtung, bei einer Frequenz von im Wesentlichen höchstens einschließlich 400 kHz, bevorzugt höchstens einschließlich 350 kHz, besonders bevorzugt höchstens einschließlich 300 kHz erfolgt; und/oder
wobei das Partialhärten (200) der einen oder mehrerer Einprägungen (20), beispielsweise mittels Laserstrahlung oder mittels Induktionshärtung, bei einer Frequenz von im Wesentlichen 300 kHz erfolgt.

9. Verfahren nach einem der vorhergehenden Ansprüche,
wobei zwischen den Schritten
Partialhärten (200) der einen oder mehrerer Einprägungen (20); und
Belasten (300) des Stahlstrangs (12);
ein Stahlstrangaußenkantenschleifen (130) des Stahlstrangs (12) erfolgt, insbesondere ein Stahlstranglängskantenschleifen (135) des Stahlstrangs (12) entlang der Längserstreckungsachse (L) erfolgt, wobei bevorzugt mindestens eine Stahlstranglängskante (18a, 18b), besonders bevorzugt beide Stahlstranglängskanten (18a, 18b) geschliffen werden.

10. Verfahren nach einem der vorhergehenden Ansprüche,
wobei das Belasten (300) ein mechanisches Belasten ist, insbesondere derart, dass das Brechen des Stahlstrangs (12) entlang der zumindest einen partialgehärteten Einprägung (20) mittels Knicken erfolgt.

11. Verfahren nach einem der vorhergehenden Ansprüche,
wobei das Belasten (300) des Stahlstrangs (12) derart erfolgt, dass der Stahlstrang (12) ausschließlich an der zur Belastungsquelle nächsten Einprägung (20) bricht und genau eine Klinge (10) freigibt (400).

12. Verfahren nach einem der Ansprüche 1 bis 10,
wobei das Belasten (300) des Stahlstrangs (12) derart erfolgt, dass der Stahlstrang (12) an der zur Belastungsquelle nächsten Einprägung (20) sowie an darauf in Richtung des Hinterendes (16) folgenden Einprägungen (20) bricht und gleichzeitig mehrere Klingen (10) freigibt (400).

13. Verfahren nach einem der vorhergehenden Ansprüche,
wobei die Klinge (10) eine Schneidklinge ist, beispielsweise eine Maschinenschneidklinge, bevorzugt mit mindestens einer Ausnehmung zur Klingenhalterung, besonders bevorzugt mit mindestens einem Langloch zur Klingenhalterung.

14. Verfahren nach einem der vorhergehenden Ansprüche, wobei
wobei der Stahlstrang (12), insbesondere als Coil ausgebildet, aus einer einzigen Legierung besteht; oder
wobei der Stahlstrang (12), insbesondere als Coil ausgebildet, aus einem Bimetall oder Trimetall besteht, wobei der Stahlstrang (12) einen Grundkörper aus einem Werkzeugstahl, beispielsweise 1.8159, aufweist und stahlstranglängskantenorientiert einseitig oder beidseitig einen HSS-Seitenstreifen, beispielsweise 1.3343, zum Stahlstrangaußenkantenschleifen (130) aufweist.

15. Verfahren nach einem der vorhergehenden Ansprüche,
wobei das Thermohärten (110) den Stahlstrang (12) im Wesentlichen auf eine Klingenzielhärte einstellt, wobei insbesondere das Verfahren ein Verfahren nach Anspruch 14 ist und die Zielhärte des Grundkörpers im Wesentlichen 450 HV 1 und/oder wobei die Zielhärte der einen oder beider HSS- Seitenstreifen im Wesentlichen 760 HV 1 beträgt.

16. Klinge, hergestellt durch ein Verfahren nach einem der Ansprüche 1 bis 15, wobei jede durch eine partialgehärtete Einprägung (20) gebildete Klingenaußenkante einen Härtungsbereich (22) aufweist, der insbesondere eine höhere Härte aufweist als das Klingengrundmaterial.

17. Klinge nach Anspruch 16, wobei der Härtungsbereich (22) von der partialgehärteten Einprägung (20) bis hin zu einer von der entsprechenden Einprägung (20) entfernten Kante des Härtungsbereichs (22) höchstens sieben Millimeter, bevorzugt höchstens fünf Millimeter, besonders bevorzugt höchstens drei Millimeter, und ganz besonders bevorzugt höchstens zwei oder einen Millimeter beträgt; und/oder
wobei der Härtungsbereich (22) von der partialgehärteten Einprägung (20) bis hin zu einer von der entsprechenden Einprägung (20) entfernten Kante des Härtungsbereichs (22) mindestens 0,1 Millimeter, bevorzugt mindestens 0,5 Millimeter, besonders bevorzugt mindestens einen Millimeter, und ganz besonders bevorzugt mindestens zwei oder drei Millimeter beträgt; und/oder
wobei insbesondere die von der jeweiligen Einprägung (20) entfernte Kante des Härtungsbereichs (22) im Wesentlichen parallel zur entsprechenden Einprägung (20) verläuft.
